# FASCICULE DE BREVET EUROPEEN

(11) **EP 3 882 096 B1**
(45) Date de publication et mention de la délivrance du brevet: **31.01.2024**
(21) Numéro de dépôt: 21160624.9
(22) Date de dépôt: 04.03.2021
(51) Int. Cl.: B60W 30/14

(54) **PROCÉDÉ DE GESTION AUTOMATISÉE DE LA VITESSE LONGITUDINALE D'UN VÉHICULE**
VERFAHREN ZUR AUTOMATISCHEN STEUERUNG DER LÄNGSGESCHWINDIGKEIT EINES FAHRZEUGS
METHOD FOR AUTOMATED MANAGEMENT OF THE LONGITUDINAL SPEED OF A VEHICLE

(30) Priorité: 20.03.2020 FR 2002752
(43) Date de publication de la demande: 22.09.2021
(73) Titulaire: Renault s.a.s, 92100 Boulogne Billancourt (FR)
(72) Inventeur: KVIESKA, Pedro, 78000 Versailles (FR); PITA-GIL, Guillermo, 78000 VERSAILLES (FR)
(74) Mandataire: Renault Group

(56) Documents cités:
- DE-A1- 10 207 580
- DE-A1-102015 120 996
- US-A1- 2009 125 203
- US-A1- 2013 297 196
- US-A1- 2014 005 908
- US-A1- 2018 093 666

## Description

L'invention concerne un procédé de gestion automatisée de la vitesse longitudinale d'un véhicule. L'invention porte encore sur un dispositif de gestion automatisée de la vitesse longitudinale d'un véhicule. L'invention porte également sur un programme d'ordinateur mettant en oeuvre le procédé mentionné. L'invention porte enfin sur un support d'enregistrement sur lequel est enregistré un tel programme.

Les technologies d'assistance à la conduite sont de plus en plus répandues et ne sont plus limitées aux véhicules haut de gamme.

Ces technologies permettent de simplifier la conduite des véhicules automobiles et/ou de fiabiliser les comportements des conducteurs des véhicules.

Des systèmes de gestion automatisée de la vitesse sont couramment installés sur les véhicules actuels, fonctionnant généralement sur la base d'une régulation de distance entre le véhicule équipé, appelé aussi véhicule ego, et celui qui le précède dans sa voie de circulation, nommé véhicule cible ou plus simplement cible.

Les systèmes de gestion automatisés de la vitesse connus de l'état de la technique manquent parfois de fiabilité. Des corrections de vitesse tardive peuvent provoquer des accélérations ou des décélérations brutales générant de l'inconfort et une absence de sentiment de sécurité. En particulier de telles situations peuvent survenir lorsque le véhicule cible change de voie de circulation ou lorsqu'un véhicule s'insère dans la voie de circulation du véhicule ego.

US 2009/0125203 divulgue un système de gestion de vitesse adaptif. Dans ce système plusieurs véhicules cibles et leurs vitesses sont détectés. La vitesse du véhicule est choisi d'être cella du véhicule cible le plus lent.

Le but de l'invention est de fournir un système et un procédé de gestion automatisée de la vitesse longitudinale d'un véhicule qui remédie aux inconvénients ci-dessus.

Un premier objet de l'invention est un procédé de gestion de la vitesse longitudinale qui produise une régulation confortable et sécurisante pour les passagers du véhicule.

A cet effet, l'invention porte sur un procédé de gestion automatisée de la vitesse longitudinale d'un véhicule ego. Le procédé comprend les étapes suivantes :
- une première étape de détection d'au moins deux véhicules cibles dans un trafic environnant le véhicule ego,
- une deuxième étape de calcul d'au moins deux vitesses longitudinales de référence, une première vitesse longitudinale de référence étant calculée en fonction d'un premier véhicule cible, une deuxième vitesse longitudinale de référence étant calculée en fonction d'un deuxième véhicule cible,
- une troisième étape de calcul d'une consigne de vitesse longitudinale du véhicule ego, la consigne de vitesse longitudinale étant égale au minimum entre les au moins deux vitesses longitudinales de référence.

Les au moins deux véhicules cibles peuvent être situés à l'avant du véhicule ego.

La première étape peut comprendre la détection d'au moins un troisième véhicule cible dans le trafic environnant le véhicule ego, notamment l'au moins un troisième véhicule cible étant situé à l'avant du véhicule ego, et la deuxième étape peut comprendre le calcul d'au moins une troisième vitesse longitudinale de référence, la troisième vitesse longitudinale de référence étant calculée en fonction du troisième véhicule cible, la consigne de vitesse longitudinale calculée lors de la troisième étape étant égale au minimum entre les au moins trois vitesses longitudinales de référence.

La première étape peut comprendre la détection d'au moins un quatrième véhicule cible dans le trafic environnant le véhicule ego, notamment l'au moins un quatrième véhicule cible étant situé à l'avant du véhicule ego, et la deuxième étape peut comprendre le calcul d'au moins une quatrième vitesse longitudinale de référence, la quatrième vitesse longitudinale de référence étant calculée en fonction du quatrième véhicule cible, la consigne de vitesse longitudinale calculée lors de la troisième étape étant égale au minimum entre les au moins quatre vitesses longitudinales de référence.

Un premier véhicule cible peut être positionné dans la même voie de circulation que le véhicule ego, devant le véhicule ego, et un deuxième véhicule cible peut être positionné devant le premier véhicule cible dans la même voie de circulation que le véhicule ego.

Un premier véhicule cible peut être positionné dans la même voie de circulation que le véhicule ego, et un deuxième véhicule cible peut être positionné sur une voie de circulation adjacente au véhicule ego.

Un premier véhicule cible peut être positionné dans la même voie de circulation que le véhicule ego, devant le véhicule ego, un deuxième véhicule cible peut être positionné devant le premier véhicule cible dans la même voie de circulation que le véhicule ego, et un troisième véhicule cible peut être positionné sur une voie de circulation adjacente au véhicule ego.

Un premier véhicule cible peut être positionné dans la même voie de circulation que le véhicule ego, devant le véhicule ego, un deuxième véhicule cible peut être positionné devant le premier véhicule cible dans la même voie de circulation que le véhicule ego, un troisième véhicule cible peut être positionné sur une première voie de circulation adjacente au véhicule ego, et un quatrième véhicule cible peut être positionné sur une deuxième voie de circulation adjacente au véhicule ego, les première deuxième voies de circulation adjacentes étant positionnées de part et d'autre de la voie de circulation du véhicule ego.

La première étape du procédé peut comprendre une sous-étape d'évaluation d'un risque d'intrusion par déboitement ou rabattement d'un véhicule cible circulant sur une voie de circulation adjacente au véhicule ego vers la voie de circulation du véhicule ego, pour chaque véhicule positionné à l'avant du véhicule ego et sur une voie adjacente à la voie du véhicule ego. Dans ce cas, seuls les véhicules présentant un risque d'intrusion supérieur à un seuil minimum pourront être détectés comme cibles lors de la première étape.

La sous-étape d'évaluation d'un risque d'intrusion d'un véhicule cible par déboitement ou rabattement peut comprendre un calcul d'un délai avant franchissement, par ledit véhicule cible, d'une ligne de démarcation située entre la voie de circulation du véhicule cible et la voie de circulation du véhicule ego.

Pour chaque véhicule cible détecté lors de la première étape, la deuxième étape comprend:
- une sous étape de calcul d'une distance longitudinale de référence à maintenir entre le véhicule cible et le véhicule ego,
- une sous-étape de calcul d'une vitesse longitudinale de référence associée audit véhicule cible, ladite vitesse longitudinale de référence étant égale à la vitesse longitudinale à laquelle le véhicule ego doit se déplacer pour maintenir ladite distance longitudinale de référence avec ledit véhicule cible.

La deuxième étape peut comprendre :
- une planification de trajectoire permettant de calculer, à partir d'une vitesse longitudinale dudit véhicule cible :
   - la distance longitudinale de référence à maintenir entre ledit véhicule cible et le véhicule ego,
   - la vitesse longitudinale relative de référence que le véhicule ego doit maintenir par rapport audit véhicule cible, et
   - une variable de pré-asservissement,
- une boucle de régulation s'appliquant à la distance longitudinale de référence, à la vitesse longitudinale relative de référence et à la variable de pré-asservissement, la boucle de régulation comprenant :
   - le calcul d'une composante proportionnelle en fonction de la différence entre la distance longitudinale de référence et une distance longitudinale mesurée entre ledit véhicule cible et le véhicule ego,
   - le calcul d'une composante dérivée en fonction de la différence entre la vitesse longitudinale relative de référence et une vitesse longitudinale relative mesurée entre le véhicule ego et ledit véhicule cible, la vitesse longitudinale de référence étant calculée en fonction de ladite composante proportionnelle, de ladite composante dérivée et de ladite variable de pré-asservissement.

La deuxième étape peut comprendre une régulation par un régulateur proportionnel dérivé, notamment la deuxième étape peut ne pas comprendre de calcul intégral.

Toutes les vitesses longitudinales de référence peuvent être calculées selon la même méthode.

L'invention porte aussi sur un dispositif permettant une gestion automatisée de la vitesse longitudinale d'un véhicule, le véhicule automobile étant équipé d'un moyen de détection du trafic environnant, le dispositif comprenant les élément matériels et/ou logiciels permettant de mettre en oeuvre le procédé défini précédemment, notamment des éléments matériels et/ou logiciels conçus pour mettre en oeuvre le procédé défini précédemment.

L'invention porte également sur un produit programme d'ordinateur comprenant des instructions de code de programme enregistrées sur un support lisible par ordinateur pour mettre en oeuvre les étapes du procédé défini précédemment lorsque ledit programme fonctionne sur un ordinateur et/ou sur un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en oeuvre le procédé défini précédemment.

L'invention porte également sur un support d'enregistrement de données, lisible par un ordinateur, sur lequel est enregistré un programme d'ordinateur comprenant des instructions de code de programme de mise en oeuvre du procédé défini précédemment et/ou sur un support d'enregistrement lisible par ordinateur comprenant des instructions qui, lorsqu'elles sont exécutées par un ordinateur, conduisent celui-ci à mettre en oeuvre le procédé défini précédemment.

L'invention porte également sur un signal d'un support de données portant le produit programme d'ordinateur défini précédemment.

Le dessin annexé représente, à titre d'exemple, un mode de réalisation d'un dispositif de gestion automatisée de la vitesse longitudinale selon l'invention et un mode d'exécution d'un procédé de gestion automatisée de la vitesse longitudinale selon l'invention.
[Fig. 1] La figure 1 représente schématiquement un mode de réalisation d'un véhicule équipé d'un moyen de mise en oeuvre d'un procédé de gestion automatisée de la vitesse longitudinale d'un véhicule automobile.
[Fig. 2] La figure 2 représente schématiquement une configuration de trafic prise en compte par le procédé de gestion de vitesse longitudinale d'un véhicule automobile.
[Fig. 3] La figure 3 est un ordinogramme d'un mode d'exécution d'un procédé de gestion automatisée de la vitesse longitudinale d'un véhicule automobile.
[Fig. 4] La figure 4 représente l'architecture haut niveau d'un module de contrôleur de distance longitudinale monocible.
[Fig. 5] La figure 5 représente un module de planification de trajectoire, constituant une sous-partie du contrôleur de distance longitudinale monocible.
[Fig. 6] La figure 6 représente une boucle de régulation, constituant une sous-partie du contrôleur de distance longitudinale monocible.

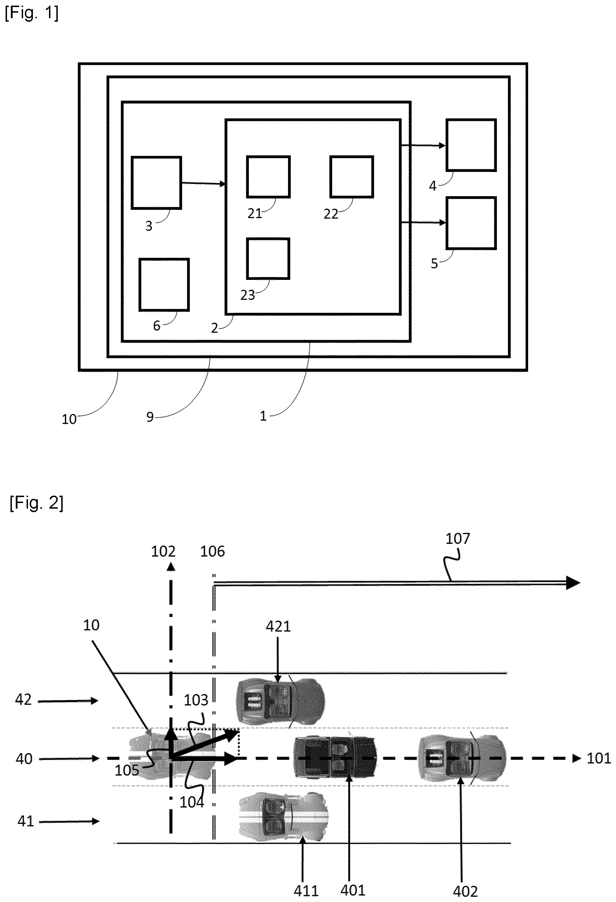

Un mode de réalisation d'un véhicule équipé d'un moyen de mise en oeuvre d'un procédé de gestion automatisée de la vitesse longitudinale est décrit ci-après en référence à la figure 1.

Le véhicule automobile 10 est un véhicule automobile de n'importe quel type, notamment un véhicule de tourisme ou un véhicule utilitaire. Dans ce document, le véhicule comprenant les moyens de mise en oeuvre de l'invention est dénommé véhicule "ego". Cette appellation permet uniquement de le distinguer d'autres véhicules environnants et ne confère en soi aucune limitation technique au véhicule automobile 10.

Le véhicule automobile 10 ou véhicule ego 10 comprend un système 1 de gestion automatisée de la vitesse longitudinale d'un véhicule automobile.

Le système 1 de gestion automatisée de la vitesse longitudinale d'un véhicule automobile peut faire partie d'un système plus global d'aide à la conduite 9.

Dans la suite du document, on désigne par véhicule cible un véhicule situé dans le trafic environnant du véhicule ego 10, dont les paramètres de trajectoire (parmi lesquels la position et la vitesse) sont pris en compte dans le calcul de la vitesse longitudinale de consigne du véhicule ego.

Un véhicule cible peut être un véhicule automobile de n'importe quel type, notamment un véhicule de tourisme ou un véhicule utilitaire ou encore une moto.

Le système 1 de gestion automatisée de la vitesse longitudinale d'un véhicule automobile comprend principalement les éléments suivants :
- un moyen de détection 3 des véhicules circulant sur la voie du véhicule automobile 10, dite voie principale, et sur les voies de circulation dites adjacentes situées de part et d'autre de la voie principale,
- un microprocesseur 2,
- une mémoire 6.

Le système 1 de gestion automatisée de la vitesse longitudinale d'un véhicule automobile, et particulièrement le microprocesseur 2, comprend principalement les modules suivants :
- un module de détection 21 d'au moins deux véhicules cibles dans le trafic environnant le véhicule ego, ce module pouvant coopérer avec le moyen de détection 3,
- un module de calcul 22 d'une vitesse longitudinale de référence associée à chacun desdits véhicules cible,
- un module de calcul 23 d'une consigne de vitesse longitudinale du véhicule ego en fonction desdites vitesses longitudinales de référence.

Le véhicule automobile 10, en particulier le système 1 de gestion automatisée de la vitesse longitudinale d'un véhicule automobile, comprend de préférence tous les éléments matériels et/ou logiciels configurés de sorte à mettre en oeuvre le procédé défini dans les revendications ou le procédé décrit plus bas.

Le moyen de détection 3 peut comprendre par exemple un radar, et/ou un lidar, et/ou une caméra et/ou tout autre type de capteur adapté à détecter des cibles dans l'environnement du véhicule ego.

Le moyen de détection 3 fournit des mesures au microprocesseur 2, parmi lesquelles
- la distance longitudinale entre le véhicule ego et les véhicules environnants,
- les vitesses longitudinale et latérale des véhicules environnants,
- l'accélération longitudinale et latérale des véhicules environnants, et
- la vitesse longitudinale relative des véhicules environnants par rapport au véhicule ego.

En outre, le microprocesseur 2 peut également recevoir une information portant la vitesse longitudinale du véhicule ego, par exemple au moyen de capteurs de vitesse du véhicule ego relié au système 1. Le microprocesseur 2 peut également recevoir une information portant la distance latérale entre le véhicule ego et des véhicules environnants et/ou des informations permettant de positionner le véhicule ego dans un référentiel, notamment de positionner le véhicule ego par rapport à des lignes de démarcation.

Le module 23 de calcul d'une consigne de vitesse longitudinale est apte à transmettre des ordres de commande à un moteur 4 ou à un système de freinage 5 du véhicule de sorte à contrôler la vitesse longitudinale du véhicule ego.

Le système 1 de gestion automatisée de la vitesse longitudinale d'un véhicule automobile comprend une mémoire 6. La mémoire 6 constitue un support d'enregistrement lisible par un ordinateur ou par le calculateur comprenant des instructions qui, lorsqu'elles sont exécutées par l'ordinateur ou le calculateur, conduisent celui-ci à mettre en oeuvre le procédé défini dans les revendications ou le procédé décrit plus bas.

En référence à la figure 2, on suppose que le véhicule automobile 10, dit véhicule ego, circule sur une chaussée comprenant trois voies de circulation dans le même sens. Les voies de circulations sont parallèles entre elles. En variante, l'invention pourrait également être mise en oeuvre dans une configuration où le véhicule ego circule sur une chaussée comprenant tout autre nombre de voies de circulation, notamment une unique voie de circulation, deux voies de circulation, ou encore quatre voies de circulation ou même davantage. Le véhicule ego 10 est positionné sur la voie centrale 40, c'est-à-dire qu'il y a une première voie de circulation 41 adjacente à droite du véhicule ego et une deuxième voie de circulation 42 adjacente à gauche du véhicule ego. En variante, l'invention pourrait aussi être mise en oeuvre lorsque le véhicule ego circule sur la voie de circulation 41 ou 42.

En référence à la figure 2, on définit la terminologie utilisée dans la suite du document :
- l'axe dit axe longitudinal 101 du véhicule ego est défini comme son axe de symétrie longitudinal, orienté vers l'avant du véhicule.
- L'axe dit axe latéral 102 du véhicule ego coupe perpendiculairement l'axe longitudinal 101 en un point situé au centre de gravité du véhicule ego, et il est orienté vers la gauche du véhicule ego.
- Le vecteur vitesse 103 du véhicule ego en projection sur l'axe longitudinal 101 définit la composante longitudinale 104 du vecteur vitesse, dite vitesse longitudinale.
- Le vecteur vitesse 103 du véhicule ego en projection sur l'axe latéral 102 définit la composante latérale 105 du vecteur vitesse, dite vitesse latérale,
- De même, une distance entre deux véhicules peut être projetée sur les axes longitudinal et latéral, définissant ainsi une distance longitudinale et une distance latérale.
- Par convention, un véhicule sera considéré comme situé à l'avant du véhicule ego s'il se trouve au moins partiellement (par exemple au moins à 50%) dans l'hémi-espace délimité par un axe 106 parallèle à l'axe latéral 102 et passant par l'extrémité avant du pare-chocs avant du véhicule ego et orienté dans la direction de l'axe 101. Cet hémi-espace correspond donc à une zone 107 dite de trafic situé à l'avant du véhicule ego.
- La voie de circulation du véhicule ego 40 est dite voie principale.
- Les voies de circulation 41 et 42 adjacentes à la voie principale et situées de part et d'autre de cette voie sont dites voies adjacentes.

Le trafic environnant le véhicule ego 10 comprend quatre véhicules 401, 402, 411, 421, dits véhicules cibles. Un premier véhicule cible 401 est positionné directement à l'avant du véhicule ego, sur la même voie de circulation 40 que le véhicule ego. Un deuxième véhicule cible 402 est positionné directement à l'avant du premier véhicule cible 401, sur la même voie de circulation 40 que le véhicule ego. Un troisième véhicule cible 411 est positionné sur la voie de circulation 41 adjacente, à droite du véhicule ego. Un quatrième véhicule cible 421 est positionné sur la voie de circulation 42 adjacente, à gauche du véhicule ego. Le procédé décrit ici sur la base d'une configuration dans lequel le trafic environnant le véhicule ego comprend quatre véhicules cibles pourrait en variante être mis en oeuvre avec tout nombre de véhicules cibles supérieur ou égal à deux. Par exemple, le procédé peut être mis en oeuvre dans une situation ou le trafic environnant ne comprend que les véhicules cibles 401 et 402, ou bien que les véhicules cibles 411 et 421, ou encore le véhicule cible 401 et le véhicule cible 411, ou encore le véhicule cible 401 et le véhicule cible 421. Comparativement à la configuration avec quatre véhicules cibles illustrée sur la figure 2, un seul des véhicules cibles 401, 402, 411, ou 421 pourrait être supprimé. Le trafic environnant le véhicule ego pourrait encore comprendre cinq ou encore davantage de véhicules cibles situés à l'avant du véhicule ego.

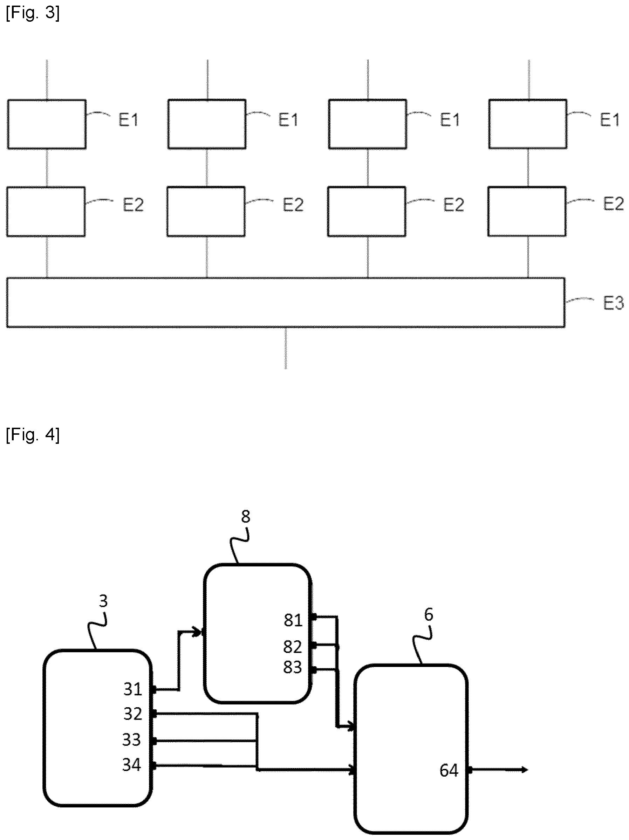

Un mode d'exécution d'un procédé de gestion automatisée de la vitesse longitudinale est décrit ci-après en référence à la figure 3. Le procédé de gestion peut aussi être vu comme étant un procédé de fonctionnement d'un système de gestion ou comme un procédé de fonctionnement d'un véhicule automobile équipé d'un système de gestion. Le procédé comprend trois étapes E1, E2 et E3 qui vont être détaillées par la suite. Comme l'illustré sur la figure 3, les étapes E1 et E2 sont exécutées en parallèle pour chacun des véhicules cibles 401, 402, 411, 421. Chaque cible est donc traitée indépendamment les unes des autres.

Dans une première étape E1, le procédé détecte les véhicules cibles parmi le trafic environnant du véhicule ego.

Pour cela, le procédé traite des données reçues d'un moyen de détection 3 embarqué dans le véhicule ego.

Les données issues du moyen de détection peuvent permettre de déterminer la localisation du véhicule ego par rapport aux voies de circulation. En particulier, elles permettent de déterminer s'il existe des voies de circulation 41 et/ou 42 adjacentes à la voie principale 40.

La détection de voies adjacentes peut être réalisée par analyse du marquage au sol, à partir des données reçues des moyens de détection 3.

La prise en compte des voies adjacentes dans la détection des cibles a pour objectif de tenir compte des véhicules qui sont susceptibles de quitter la voie principale (situation dite de "cut-out") ou s'insérer sur la voie principale (situation dite de cut-in).

Le risque d'une situation de cut-out ou d'une situation de cut-in, ou risque d'intrusion, associé à un véhicule circulant sur une voie adjacente peut être évalué en fonction de différents critères parmi lesquels :
- un seuil minimum appliqué au Time to Line Crossing ou TLC dudit véhicule, correspondant au délai avant intrusion dudit véhicule sur la voie de circulation du véhicule ego, et/ou
- la détection de la présence d'un clignotant sur ledit véhicule, et/ou
- la prise en compte de la vitesse latérale dudit véhicule, et/ou
- un seuil minimum appliqué à la distance longitudinale et/ou latérale séparant ledit véhicule du véhicule ego.

La sélection des cibles s'effectue sur la zone constituée de la voie principale 40 et des deux voies adjacentes 41 et 42.

Dans un mode de réalisation, les critères de sélection des cibles peuvent être les suivants :
- au moins deux et au plus quatre cibles sont sélectionnées par le procédé,
- la sélection des cibles s'effectue sur la zone de trafic 107 située à l'avant du véhicule ego,
- les cibles 401 et 402 sont sélectionnées sur la voie principale 40,
- les cibles sélectionnées sur la voie principale 40 sont le véhicule 401 qui précède le véhicule ego, et le véhicule 402 qui précède le véhicule 401,
- sur chacune des voies adjacentes 41 et 42, une cible est sélectionnée, à la condition qu'elle soit détectée comme étant à risque de cut-in ou de cut-out.

Dans le cas d'une seule cible la régulation classique est appliquée.

Ainsi, sur la configuration de trafic présentée par la figure 2, la première étape du procédé identifiera automatiquement les véhicules 401 et 402 comme étant des cibles et évaluera le risque d'intrusion de chacun des véhicules 411 et 421 pour déterminer s'ils constituent des cibles.

La première étape E1, prend en compte différentes configurations concernant les voies de circulation :
- lorsque le nombre de voies circulant dans le même sens est supérieur à trois, de préférence seules les au plus deux voies adjacentes de la voie principale sont prises en compte,
- lorsque le véhicule ego circule sur la voie de plus faible vitesse 41 ou sur la voie plus grande vitesse 42, de préférence une seule voie adjacente est prise en compte,
- sur les routes à une seule voie, de préférence seules les deux cibles situées sur la voie dite principale seront détectées.

La première étape E1 prend également en compte la détection de cibles dans les virages. En particulier, dans un virage, la trajectoire d'un véhicule circulant sur une voie adjacente 41 ou 42 peut croiser temporairement l'axe longitudinal du véhicule ego, alors même que ce véhicule reste sur la voie adjacente à celle du véhicule ego. Le procédé a la capacité d'analyser cette situation de manière connue, de sorte que ledit véhicule soit bien considéré comme circulant sur une voie adjacente.

Les changements de voie des véhicules situés dans le trafic environnant du véhicule ego sont analysés de manière dynamique lors de l'exécution du procédé, en particulier lorsqu'ils modifient la sélection des cibles. Par exemple, si un véhicule 421 se rabat entre le véhicule ego et la cible 401 située juste devant le véhicule ego, alors le véhicule 421 remplacera la cible 401 et cette dernière remplacera la cible 402 qui ne sera de ce fait plus prise en compte par le procédé.

Lors de la phase transitoire d'un changement de voie d'un véhicule situé dans le trafic environnant du véhicule ego, le procédé applique des critères permettant de déterminer dans quelle voie se situe un véhicule en train de franchir une ligne de démarcation. Ces critères peuvent inclure la distance latérale de franchissement d'une ligne de démarcation.

En variante, un mode de réalisation pourrait traiter plus de quatre cibles.

En variante, l'axe 106, marquant la limite de la zone de trafic dit avant 107, peut être reculé, de telle sorte à pouvoir sélectionner des cibles plus en amont dans le trafic (c'est-à-dire plus vers l'arrière du véhicule ego) pour anticiper de potentiels véhicules en situation de cut-in ou de cut-out. Par exemple l'axe 106 pourrait être reculé au niveau de l'extrémité arrière du pare-chocs arrière du véhicule ego. On peut également considérer qu'un véhicule est une cible potentielle lorsqu'elle se trouve, par exemple, au moins à 10% dans la zone de trafic avant 107. Le procédé peut donc être mis en oeuvre en prenant en compte des véhicules situés en arrière du véhicule ego et/ou sur les côtés du véhicule ego. La limite de la zone de trafic considérée peut être simplement limitée par la portée des moyens de détection 3.

De manière préférentielle, la prise en compte d'un véhicule situé en arrière du véhicule ego et/ou sur les côtés du véhicule ego, pourrait intégrer un critère de distance longitudinale entre ledit véhicule et le véhicule ego, afin d'éviter des variations de vitesse trop brusques pour le véhicule ego, notamment pour éviter des décélérations trop brutales du véhicule ego.

Dans une deuxième étape E2, pour chaque cible sélectionnée par l'étape E1, le procédé calcule une vitesse longitudinale dite de référence. Ladite vitesse longitudinale de référence associée à une cible est la vitesse longitudinale à laquelle le véhicule ego doit se déplacer pour maintenir une distance longitudinale de sécurité donnée avec ladite cible, avec une dynamique d'asservissement du second ordre.

Dans la suite du document, on désigne par
- distance longitudinale relative : la distance longitudinale entre le véhicule ego et la cible, et
- vitesse longitudinale relative : l'écart entre la vitesse longitudinale du véhicule ego et la vitesse longitudinale de la cible.

Le calcul de la vitesse longitudinale de référence est réalisé dans un module dit contrôleur de distance longitudinale monocible (figure 4).

Le contrôleur de distance longitudinale monocible utilise les mesures suivantes issues du moyen de détection 3 :
- la vitesse longitudinale 31 de la cible,
- la distance longitudinale 32 actuellement mesurée entre la cible et le véhicule ego,
- la vitesse longitudinale relative 33 actuellement mesurée entre le véhicule ego et la cible,
- la vitesse longitudinale 34 du véhicule ego.

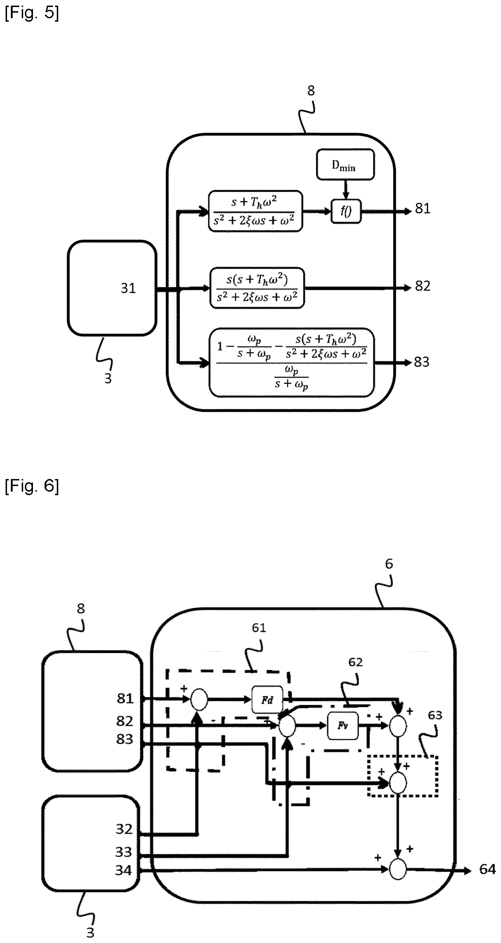

Le contrôleur de distance longitudinale monocible effectue un traitement en deux étapes :
- un sous-module de planification de trajectoire 8 (figures 4 et 5) qui détermine la distance longitudinale de référence 81 à maintenir entre la cible et le véhicule ego, et
- une boucle de régulation 6 (figures 4 et 6) qui définit une vitesse longitudinale de référence du véhicule ego 64 pour maintenir cette distance longitudinale de référence.

L'objectif du sous-module de planification de trajectoire 8 est de maintenir une distance longitudinale constante entre la cible et le véhicule ego en régime permanent.

Dans un mode de réalisation du sous-module de planification de trajectoire 8, un asservissement de deuxième ordre peut être utilisé pour lisser les éventuelles variations de vitesses induites par une cible dont le mode de conduite serait saccadé, la dynamique d'asservissement du second ordre s'appliquant sur chaque cible donnée.

Dans ce mode de réalisation, le sous-module de planification de trajectoire, dont un exemple est détaillé en figure 5, prend en entrée la vitesse longitudinale 31 de la cible et produit trois paramètres en sortie :
- la distance longitudinale de référence 81 à maintenir entre le véhicule ego et la cible,
- la vitesse longitudinale relative de référence 82 que le véhicule ego doit maintenir par rapport à la cible, et
- une variable de pré-asservissement 83, dite Feedforward.

Une méthode de calcul de ces paramètres est illustrée dans la figure 5, où :
- s est la variable de Laplace (variable fonction d'une fréquence),
- ξ est le coefficient d'amortissement souhaité pour une dynamique de second ordre (sans dimension),
- ω est la pulsation naturelle ou propre non amortie pour une dynamique du second ordre (exprimée en radian par seconde),
- ωₚ est la constante de temps du moteur (exprimée en radian par seconde),
- Tₕ est le temps de suivi souhaité (exprimé en seconde).
- la fonction f() est une fonction non linéaire qui arbitre entre la distance longitudinale calculée par un module de calcul de distance longitudinale 811, et une distance longitudinale minimale Dₘᵢₙ, par exemple la fonction f() peut retourner le maximum des deux distances longitudinales précitées.

Dans ce mode de réalisation, les trois paramètres précités 81, 82 et 83, issus de la planification de trajectoire 8 sont fournis en entrée de ladite boucle de régulation 6. La boucle de régulation 6 asservit la distance longitudinale avec la vitesse longitudinale.

Dans un mode de réalisation (figure 6), la boucle de régulation 6 est de type proportionnel dérivé sur la distance longitudinale relative et la vitesse longitudinale relative, avec une variable de pré-asservissement.

Dans ce mode de réalisation (figure 6), la boucle de régulation calcule un écart de vitesse longitudinale 63 qui est ajouté à la vitesse longitudinale mesurée 34 pour le véhicule ego, pour obtenir la vitesse longitudinale de référence 64 du véhicule ego.

L'écart de vitesse longitudinale 63 est calculé selon les étapes suivantes :
- le calcul d'une erreur en distance longitudinale, correspondant à la différence entre la distance longitudinale de référence 81, obtenue en sortie du sous-module de planification de trajectoire, et la distance longitudinale actuellement mesurée 32 entre la cible et le véhicule ego,
- l'application d'un premier facteur multiplicatif F_{d} ,ou premier gain, à ladite erreur en distance longitudinale, sachant que (i) ce premier gain étant homogène à une fréquence, le produit de l'erreur en distance longitudinale par le premier gain est proportionnel à une vitesse, et (ii) le résultat du produit constitue la composante proportionnelle 61 du régulateur,
- le calcul d'une erreur en vitesse longitudinale relative, correspondant à la différence entre d'une part la vitesse longitudinale relative de référence 82 obtenue en sortie du sous-module de planification de trajectoire et d'autre part la vitesse longitudinale relative 33 actuellement mesurée entre le véhicule ego et la cible,
- l'application d'un deuxième facteur multiplicatif Fᵥ, ou gain à ladite erreur en vitesse longitudinale, sachant que (iii) ce deuxième gain n'ayant pas d'unité, le produit de l'erreur en vitesse longitudinale par le deuxième gain est proportionnel à une vitesse, et (iv) le résultat du produit constitue la composante dérivative 62 du régulateur,
- le calcul de l'écart de vitesse longitudinale en sortie du régulateur 63, correspondant à la somme des deux composantes -proportionnelle et dérivative- du régulateur et de la variable de pré-asservissement.

A l'issue de l'étape E2, le procédé fournit ainsi une vitesse longitudinale de référence 64 pour chacune des cibles, en parallélisant les modules de contrôle de distance longitudinale monocible des au moins deux cibles. La vitesse longitudinale de chacune des cibles est ainsi avantageusement calculée avec la même méthode, c'est-à-dire avec le même algorithme de calcul.

Le choix de ne pas utiliser de terme intégral dans la boucle de régulation, rend possible la mise en parallèle des modules de contrôle de distance longitudinale. En effet, parmi les au moins deux boucles de régulation du procédé, une seule boucle de régulation verra sa sortie réinjectée dans le procédé via la vitesse longitudinale de consigne du véhicule. La présence d'un terme intégral dans les boucles de régulation pourrait de ce fait induire un phénomène de divergence des commandes non activées. Une architecture plus complexe serait alors nécessaire pour éviter un emballement du système lié à la divergence des commandes.

Dans une troisième étape E3, le procédé calcule la consigne de vitesse longitudinale du véhicule ego permettant de maintenir une distance longitudinale minimale donnée entre le véhicule ego et toutes les cibles identifiées dans l'étape E1.

La consigne de vitesse longitudinale du véhicule ego sera calculée en sélectionnant la vitesse longitudinale minimale parmi toutes les vitesses longitudinales de référence calculées lors de l'étape E2.

De cette façon, le procédé se retrouve en configuration de guidage monocible sur la cible présentant la vitesse longitudinale de référence la plus contraignante. Le choix de la cible de régulation est amélioré par le fait qu'il s'effectue après le calcul de régulation des vitesses longitudinales de référence de chacune des cibles

L'invention se différencie ainsi avantageusement d'un procédé de guidage monocible qui prendrait en compte la cible la plus proche. En effet,
- l'invention tient compte du fait que la cible la plus proche n'est pas nécessairement la plus contraignante en termes de régulation de vitesse longitudinale,
- les cibles identifiées comme telles étant prises en compte en continu par l'invention, un changement de cible n'induit pas d'à-coups dans la régulation de la vitesse longitudinale, puisque ledit changement de cible correspond à un croisement des courbes de régulation de vitesse longitudinale relatives à l'ancienne et à la nouvelle cible.

Différents cas d'utilisation sont décrits ci-après afin d'illustrer l'intérêt de l'invention par rapport à un procédé classique de guidage longitudinal monocible. Dans chacun de ces cas, le procédé mis en oeuvre par l'invention permet d'éviter ou de limiter des variations de vitesse longitudinale du véhicule ego, dans des configurations de circulation classiques où un guidage monocible induirait des brusques variations de vitesse longitudinale et/ou des variations de vitesse longitudinale très transitoires.

Dans une première situation de cut-in d'un véhicule se déplaçant à une vitesse longitudinale proche de celle du véhicule ego, l'invention permet de prendre en compte ledit véhicule avant qu'il ne déboite sur la voie principale et ainsi d'anticiper les variations de vitesse longitudinale, ce qui rend le freinage plus confortable.

Dans une deuxième situation où un véhicule double le véhicule ego avec une importante différence de vitesse longitudinale (ce qui se produit par exemple lorsqu'une moto remonte une file de voitures), un guidage monocible asservirait la vitesse longitudinale du véhicule ego audit véhicule, le temps de son passage, ce qui induirait une accélération puis un freinage très rapprochés. Le procédé multicibles de l'invention permet de ne pas prendre en compte ledit véhicule pour la régulation de vitesse longitudinale du véhicule ego, ou bien de le prendre en compte sur un laps de temps très réduit.

De même, dans une troisième situation où un véhicule ne fait que traverser rapidement la voie principale, par exemple pour se déplacer de la voie adjacente gauche à la voie adjacente droite ou inversement, là encore le procédé multicibles de l'invention permet de ne pas tenir compte de la vitesse longitudinale dudit véhicule pour la régulation de vitesse, ou bien de la prendre en compte sur un laps de temps très réduit.

Dans une quatrième situation où le véhicule ego 10 est précédé d'un autre véhicule 401 situé sur la voie principale, et que ce dernier est lui-même précédé d'un véhicule 402 situé sur la même voie, un guidage monocible s'effectuerait exclusivement sur la cible 401. Le procédé de guidage mis en oeuvre par l'invention permet de tenir compte à la fois de la cible 401 et de la cible 402. De ce fait, si la cible 402 freine, le véhicule ego commencera à freiner, sans attendre que la cible 401 ne le fasse.

## Revendications

1. Procédé de gestion automatisée de la vitesse longitudinale d'un véhicule ego (10), comprenant
- une première étape (E1) de détection d'au moins deux véhicules cibles (401, 402, 411, 421) dans un trafic environnant le véhicule ego,
- une deuxième étape (E2) de calcul d'au moins deux vitesses longitudinales de référence, une première vitesse longitudinale de référence étant calculée en fonction d'un premier véhicule cible (401, 402, 411, 421), une deuxième vitesse longitudinale de référence étant calculée en fonction d'un deuxième véhicule cible (401, 402, 411,421),
- une troisième étape (E3) de calcul d'une consigne de vitesse longitudinale du véhicule ego, la consigne de vitesse longitudinale étant égale au minimum entre les au moins deux vitesses longitudinales de référence,
et pour chaque véhicule cible détecté lors de la première étape (E1), la deuxième étape (E2) comprend :
- une sous étape de calcul d'une distance longitudinale de référence (81) à maintenir entre le véhicule cible et le véhicule ego,
- une sous-étape de calcul d'une vitesse longitudinale de référence (64) associée audit véhicule cible, ladite vitesse longitudinale de référence (64) étant égale à la vitesse longitudinale à laquelle le véhicule ego doit se déplacer pour maintenir ladite distance longitudinale de référence (81) avec ledit véhicule cible.

2. Procédé selon la revendication précédente, **caractérisé en ce que** les au moins deux véhicules cibles (401, 402, 411, 421) sont situés à l'avant du véhicule ego (10).

3. Procédé selon l'une des revendications précédentes **caractérisé en ce que**
- la première étape (E1) comprend une sous-étape d'évaluation d'un risque d'intrusion par déboitement ou rabattement d'un véhicule cible (411, 421) circulant sur une voie de circulation (41, 42) adjacente au véhicule ego vers la voie de circulation (40) du véhicule ego, pour chaque véhicule (411, 421) positionné à l'avant du véhicule ego et sur une voie adjacente à la voie du véhicule ego,
- et **en ce que** seuls les véhicules présentant un risque d'intrusion supérieur à un seuil minimum seront détectés comme cibles lors de la première étape (E1).

4. Procédé selon la revendication précédente, **caractérisé en ce que** la sous-étape d'évaluation d'un risque d'intrusion d'un véhicule cible par déboitement ou rabattement comprend un calcul d'un délai avant franchissement, par ledit véhicule cible, d'une ligne de démarcation située entre la voie de circulation (41, 42) du véhicule cible et la voie de circulation (40) du véhicule ego.

5. Procédé selon l'une des revendications précédentes, **caractérisé en ce que** la deuxième étape (E2) comprend :
- une planification de trajectoire (8) permettant de calculer, à partir d'une vitesse longitudinale (31) dudit véhicule cible :
- la distance longitudinale de référence (81) à maintenir entre ledit véhicule cible et le véhicule ego,
- la vitesse longitudinale relative de référence (82) que le véhicule ego doit maintenir par rapport audit véhicule cible, et
- une variable de pré-asservissement (83),
- une boucle de régulation (6) s'appliquant à la distance longitudinale de référence (81), à la vitesse longitudinale relative de référence (82) et à la variable de pré-asservissement (83), la boucle de régulation (6) comprenant :
- le calcul d'une composante proportionnelle (61) en fonction de la différence entre la distance longitudinale de référence (81) et une distance longitudinale mesurée (32) entre ledit véhicule cible et le véhicule ego,
- le calcul d'une composante dérivée (62) en fonction de la différence entre la vitesse longitudinale relative de référence (82) et une vitesse longitudinale relative mesurée (33) entre le véhicule ego et ledit véhicule cible,
la vitesse longitudinale de référence (64) étant calculée en fonction de ladite composante proportionnelle (61), de ladite composante dérivée (62) et de ladite variable de pré-asservissement (83).

6. Procédé selon l'une des revendications précédentes, **caractérisé en ce que** la deuxième étape (E2) comprend une régulation par un régulateur proportionnel dérivé, notamment **en ce que** la deuxième étape ne comprend pas de calcul intégral.

7. Procédé selon l'une des revendications précédentes, **caractérisé en ce que** toutes les vitesses longitudinales de référence sont calculées selon la même méthode.

8. Dispositif (1) de gestion automatisée de la vitesse longitudinale d'un véhicule (10), le véhicule automobile étant équipé d'un moyen de détection (3) du trafic environnant, le dispositif comprenant des éléments (2, 6, 21, 22, 23) matériels et/ou logiciels mettant en oeuvre le procédé selon l'une des revendications 1 à 7.

9. Produit programme d'ordinateur comprenant des instructions de code de programme enregistrées sur un support lisible par ordinateur pour mettre en oeuvre les étapes du procédé selon l'une quelconque des revendications 1 à 7 lorsque ledit programme fonctionne sur un ordinateur.

## Patentansprüche

1. Verfahren zur automatischen Steuerung der Längsgeschwindigkeit eines Ego-Fahrzeugs (10), beinhaltend:
- einen ersten Schritt (E1) des Detektierens von mindestens zwei Zielfahrzeugen (401, 402, 411, 421) in einem Umgebungsverkehr des Ego-Fahrzeugs,
- einen zweiten Schritt (E2) des Berechnens von mindestens zwei Referenzlängsgeschwindigkeiten, wobei eine erste Referenzlängsgeschwindigkeit in Abhängigkeit von einem ersten Zielfahrzeug (401, 402, 411, 421) berechnet wird und eine zweite Referenzlängsgeschwindigkeit in Abhängigkeit von einem zweiten Zielfahrzeug (401, 402, 411, 421) berechnet wird,
- einen dritten Schritt (E3) des Berechnens eines Längsgeschwindigkeitssollwerts des Ego-Fahrzeugs, wobei der Längsgeschwindigkeitssollwert der kleinsten von den mindestens zwei Referenzlängsgeschwindigkeiten entspricht,
und wobei der zweite Schritt (E2) für jedes Zielfahrzeug, das während des ersten Schritts (E1) detektiert wurde, Folgendes beinhaltet:
- einen Unterschritt des Berechnens eines Referenzlängsabstands (81), der zwischen dem Zielfahrzeug und dem Ego-Fahrzeug zu halten ist,
- einen Unterschritt des Berechnens einer Referenzlängsgeschwindigkeit (64), die mit dem Zielfahrzeug assoziiert ist, wobei die Referenzlängsgeschwindigkeit (64) gleich der Längsgeschwindigkeit ist, mit der sich das Ego-Fahrzeug fortbewegen muss, um den Referenzlängsabstand (81) zu dem Zielfahrzeug zu halten.

2. Verfahren nach dem vorhergehenden Anspruch, **dadurch gekennzeichnet, dass** sich die mindestens zwei Zielfahrzeuge (401, 402, 411, 421) vor dem Ego-Fahrzeug (10) befinden.

3. Verfahren nach einem der vorhergehenden Ansprüche, **dadurch gekennzeichnet, dass**
- der erste Schritt (E1) einen Unterschritt des Ermittelns eines Eindringrisikos durch Ausscheren oder Einscheren eines Zielfahrzeugs (411, 421), das auf einer angrenzenden Fahrspur (41, 42) des Ego-Fahrzeugs fährt, auf die Fahrspur (40) des Ego-Fahrzeugs beinhaltet, für jedes Fahrzeug (411, 421), das sich vor dem Ego-Fahrzeug und auf einer an die Spur des Ego-Fahrzeugs angrenzenden Spur befindet,
- und dass nur die Fahrzeuge, die ein Eindringrisiko aufweisen, das größer als ein Mindestschwellenwert ist, während des ersten Schritts (E1) als Zielfahrzeuge detektiert werden.

4. Verfahren nach dem vorhergehenden Anspruch, **dadurch gekennzeichnet, dass** der Unterschritt des Ermittelns eines Eindringrisikos eines Zielfahrzeugs durch Ausscheren oder Einscheren das Berechnen einer Zeitspanne beinhaltet, bevor das Zielfahrzeug eine Trennungslinie, die sich zwischen der Fahrspur (41, 42) des Zielfahrzeugs und der Fahrspur (40) des Ego-Fahrzeugs befindet, überquert.

5. Verfahren nach einem der vorhergehenden Ansprüche, **dadurch gekennzeichnet, dass** der zweite Schritt (E2) Folgendes beinhaltet:
- eine Bahnplanung (8), die es gestattet, anhand einer Längsgeschwindigkeit (31) des Zielfahrzeugs Folgendes zu berechnen:
- den zwischen dem Zielfahrzeug und dem Ego-Fahrzeug zu haltenden Referenzlängsabstand (81),
- die relative Referenzlängsgeschwindigkeit (82), die das Ego-Fahrzeug mit Bezug auf das Zielfahrzeug halten muss, und
- eine Feedforward-Steuervariable (83),
- wobei auf den Referenzlängsabstand (81), die relative Referenzlängsgeschwindigkeit (82) und die Feedforward-Steuervariable (83) ein Regelkreis (6) angewendet wird, wobei der Regelkreis (6) Folgendes beinhaltet:
- das Berechnen eines Proportionalanteils (61) in Abhängigkeit von der Differenz zwischen dem Referenzlängsabstand (81) und einem zwischen dem Zielfahrzeug und dem Ego-Fahrzeug gemessenen Längsabstand (32),
- das Berechnen eines Differentialanteils (62) in Abhängigkeit von der Differenz zwischen der relativen Referenzlängsgeschwindigkeit (82) und einer zwischen dem Ego-Fahrzeug und dem Zielfahrzeug gemessenen relativen Längsgeschwindigkeit (33),
wobei die Referenzlängsgeschwindigkeit (64) in Abhängigkeit von dem Proportionalanteil (61), dem Differentialanteil (62) und der Feedforward-Steuervariablen (83) berechnet wird.

6. Verfahren nach einem der vorhergehenden Ansprüche, **dadurch gekennzeichnet, dass** der zweite Schritt (E2) eine Regelung durch einen Proportional-Differential-Regler beinhaltet, insbesondere dass der zweite Schritt keine Integralrechnung beinhaltet.

7. Verfahren nach einem der vorhergehenden Ansprüche, **dadurch gekennzeichnet, dass** alle Referenzlängsgeschwindigkeiten gemäß derselben Methode berechnet werden.

8. Vorrichtung (1) zur automatischen Steuerung der Längsgeschwindigkeit eines Fahrzeugs (10), wobei das Fahrzeug mit einem Erfassungsmittel (3) für den Umgebungsverkehr ausgerüstet ist, wobei die Vorrichtung Hardware- und/oder Softwareelemente (2, 6, 21, 22, 23) beinhaltet, die das Verfahren nach einem der Ansprüche 1 bis 7 umsetzen.

9. Computerprogrammprodukt, das Programmcodeanweisungen beinhaltet, die auf einem computerlesbaren Träger gespeichert sind, um die Schritte des Verfahrens nach einem beliebigen der Ansprüche 1 bis 7 umzusetzen, wenn das Programm auf einem Computer ausgeführt wird.

## Claims

1. Method for automatically managing the longitudinal speed of an ego vehicle (10), comprising:
- a first step (E1) of detecting at least two target vehicles (401, 402, 411, 421) in traffic surrounding the ego vehicle,
- a second step (E2) of calculating at least two reference longitudinal speeds, a first reference longitudinal speed being calculated on the basis of a first target vehicle (401, 402, 411, 421), a second reference longitudinal speed being calculated on the basis of a second target vehicle (401, 402, 411, 421),
- a third step (E3) of calculating a longitudinal speed setpoint of the ego vehicle, the longitudinal speed setpoint being equal to the lowest of the at least two reference longitudinal speeds,
and for each target vehicle detected during the first step (E1), the second step (E2) comprises:
- a substep of calculating a reference longitudinal distance (81) to be maintained between the target vehicle and the ego vehicle,
- a substep of calculating a reference longitudinal speed (64) associated with said target vehicle, said reference longitudinal speed (64) being equal to the longitudinal speed at which the ego vehicle should move so as to maintain said reference longitudinal distance (81) with said target vehicle.

2. Method according to the preceding claim, **characterized in that** the at least two target vehicles (401, 402, 411, 421) are situated ahead of the ego vehicle (10) .

3. Method according to either of the preceding claims, **characterized in that**
- the first step (E1) comprises a substep of evaluating a risk that a target vehicle (411, 421) travelling in a traffic lane (41, 42) adjacent to the ego vehicle will encroach towards the traffic lane (40) of the ego vehicle due to changing lane or pulling back into said traffic lane (40), for each vehicle (411, 421) positioned ahead of the ego vehicle and in a lane adjacent to the lane of the ego vehicle,
- and **in that** only the vehicles that have an encroachment risk greater than a minimum threshold will be detected as targets during the first step (E1).

4. Method according to the preceding claim, **characterized in that** the substep of evaluating an encroachment risk of a target vehicle due to changing lane or pulling back into a lane comprises calculating a time before said target vehicle crosses a demarcation line situated between the traffic lane (41, 42) of the target vehicle and the traffic lane (40) of the ego vehicle.

5. Method according to one of the preceding claims, **characterized in that** the second step (E2) comprises:
- trajectory planning (8) making it possible to calculate, on the basis of a longitudinal speed (31) of said target vehicle:
- the reference longitudinal distance (81) to be maintained between said target vehicle and the ego vehicle,
- the reference relative longitudinal speed (82) that the ego vehicle should maintain with respect to said target vehicle, and
- a pre-servo-control variable (83),
- a control loop (6) applying to the reference longitudinal distance (81), to the reference relative longitudinal speed (82) and to the pre-servo-control variable (83), the control loop (6) comprising:
- calculating a proportional component (61) on the basis of the difference between the reference longitudinal distance (81) and a longitudinal distance (32) measured between said target vehicle and the ego vehicle,
- calculating a derivative component (62) on the basis of the difference between the reference relative longitudinal speed (82) and a relative longitudinal speed (33) measured between the ego vehicle and said target vehicle,
the reference longitudinal speed (64) being calculated on the basis of said proportional component (61), said derivative component (62) and said pre-servo-control variable (83).

6. Method according to one of the preceding claims, **characterized in that** the second step (E2) comprises control by means of a proportional-derivative controller, in particular **in that** the second step does not comprise integral calculation.

7. Method according to one of the preceding claims, **characterized in that** all of the reference longitudinal speeds are calculated using the same method.

8. Device (1) for automatically managing the longitudinal speed of a vehicle (10), the motor vehicle being equipped with a means (3) for detecting the surrounding traffic, the device comprising hardware and/or software elements (2, 6, 21, 22, 23) implementing the method according to one of Claims 1 to 7.

9. Computer program product comprising program code instructions stored on a computer-readable medium with a view to implementing the steps of the method according to any one of Claims 1 to 7 when said program is run on a computer.
